Europäisches Patentamt

European Patent Office

Office européen des brevets

(19)

(11) Publication number: **0 159 106 B1**

(12) # EUROPEAN PATENT SPECIFICATION

(45) Date of publication of the patent specification: **11.03.87**

(51) Int. Cl.⁴: **B 60 R 16/04**

(21) Application number: **85300423.2**

(22) Date of filing: **23.01.85**

(54) **Battery clamp assembly.**

(30) Priority: **29.02.84 GB 8405312**

(43) Date of publication of application:
**23.10.85 Bulletin 85/43**

(45) Publication of the grant of the patent:
**11.03.87 Bulletin 87/11**

(84) Designated Contracting States:
**AT BE DE FR IT NL SE**

(56) References cited:
**DE - B - 2 701 780
DE - C - 824 443
US - A - 2 853 143
US - A - 3 298 454
US - A - 4 252 206
US - A - 4 367 572**

(73) Proprietor: **GENERAL MOTORS OVERSEAS COMMERCIAL VEHICLE CORPORATION, Bedford Division 3044 West Grand Boulevard, Detroit Michigan 48202 (US)**

(72) Inventor: **Millson, Alan John, 102 Brompton Close, Luton Bedfordshire LU3 3 QU (GB)**

(74) Representative: **Haines, Arthur Donald, GM Patent Section Luton Office (F6) P.O. Box No. 3 Kimpton Road, Luton, Beds. LU2 0SY (GB)**

# Description

This invention relates to battery clamp assemblies for retaining an electrical storage battery in place upon a motor vehicle, and, in particular, relates to an improved clamp assembly of the type which straddles the top of the electrical storage battery and has adjustable anchor members which are adjustable in length in order to clamp the electrical storage battery in place upon the motor vehicle. (See DE-B-2.701.780 corresponding to the pre-characterizing part of Claim 1).

Generally speaking, rechargeable electrical storage batteries used on motor vehicles are heavy, cumbersome items which, owing to their liquid acid content and their high electrical energy content when charged, need to be firmly secured in position on a motor vehicle in such a way as to prevent any risk of such a storage battery breaking free from its mounting and moving relative to the vehicle is in motion. Many devices have been utilised in the past to secure such electrical storage batteries from relative movement in a motor vehicle, which devices range from mating configurations on the battery case and support frame to removeable clamping assemblies which seat along a longitudinal edge of the storage battery case and apply a clamping force to the electrical storage battery along a diagonal of the end faces of the storage battery.

A new design of electrical storage battery is now being commercially produced by General Motors which is sold under the commercial name of the AC-Delco «Freedom» storage battery. Unlike previous storage batteries, this new design of storage battery does not require periodic maintenance of the liquid acid level in the storage battery, and the storage battery is, effectively, a sealed unit as far as the liquid acid content is concerned. The battery case of these new electrical storage batteries is manufactured from polypropylene, and the top surface of such batteries presents a substantially flat surface apart from the two terminal posts by which the storage battery is connected to the electrical system of the motor vehicle in which it is installed.

The polypropylene battery cases of these new electrical storage batteries are formed by injection moulding techniques, and the finished battery case displays an external surface which is characteristically smooth and slippery to the touch. Consequently, there is a need to avoid the possibility of such batteries slipping when restrained in a motor vehicle by known clamping assemblies for vehicle batteries, particularly in view of the smooth and regular outline of the electrical storage battery concerned. Moreover, in the field of commercial vehicles, there is also a need to provide a battery clamp assembly which can be used to restrain a number of different sizes of batteries of this new design, since commercial vehicles are often produced in a variety of forms based upon a common design, which forms may have varying needs for electrical storage battery capacity when operating, and thus will require different sizes of storage battery.

A battery clamp assembly according to the present invention, for retaining an electrical storage battery in place upon a motor vehicle, comprises a rigid bridging member having opposed free ends, each of which is releasably engaged with an anchor member adjustable in length and adapted at a free end thereof to engage with a body structure of said motor vehicle, characterised in that said bridging member is provided with a substantially flat clamping surface which is at least partially covered with a substantially smooth, acid-resistant material having a high coefficient of friction, so that, when the clamp assembly is used to clamp said storage battery in place upon said motor vehicle by placing the bridging member across an uper surface of the storage battery, engaging the free ends of the bridging member with the respective anchor members, engaging the respective anchor members with the body structure and adjusting the lengths thereof to clamp the clamping surface of the bridging member firmly against said upper surface of the storage battery, the covered portions of said clamping surface retain the storage battery securely in place upon the motor vehicle and prevent any substantial relative movement between said storage battery and said motor vehicle body structure.

Preferably the acid-resistant material has a coefficient of friction within the range of 0.8 to 1.2.

In one embodiment of the present invention, the acid-resistant material is secured to the clamping surface of the bridging member by means of an adhesive.

Alternatively the clamping surface of the bridging member could be completely covered by a sprayed or dipped coating of said acid-resistant material.

Advantageously, the acid-resistant material is also a resilient material, to improve contact thereof with the top surface of a vehicle battery restrained by said battery clamp assembly. A highly suitable, commercially available material for this purpose is a polyurethane rubber material sold by 3M United Kingdom Plc Tape & Allied Products Division under the roll stock number of SJ 5816.

In a preferred embodiment of the present invention, the bridging member is a substantially rectangular plate member having the longitudinal edges thereof upturned to produce a member having a substantially channel-shaped cross-section, and having the lateral edges thereof apertured to accommodate respective anchor members; each anchor member comprises a hooked bolt having the hooked portion thereof engageable in a respective aperture in said body structure and a threaded end portion thereof passing through the aperture in the respective lateral edge of the plate number and having threaded thereon a nut member adapted to bear against the upper surface of the plate member; and the lower surface of the plate member constitutes said clamping surface upon which is secured at least two discrete pads of said acid-resistant material.

The invention and how it may be performed are hereinafter particularly described with reference to the accompanying drawings, in which:

Figure 1 is an isometric view of one embodiment of a battery clamp assembly according to the present invention;

Figure 2 is a top view of a bridging member of the battery clamp assembly shown in Figure 1;

Figure 3 is a bottom view of the bridging member shown in Figure 2;

Figure 4 is a cross-sectional view of the bridging member shown in Figure 3, taken along the line 4-4' of Figure 3; and

Figure 5 is a view of one of the anchor members shown in Figure 1.

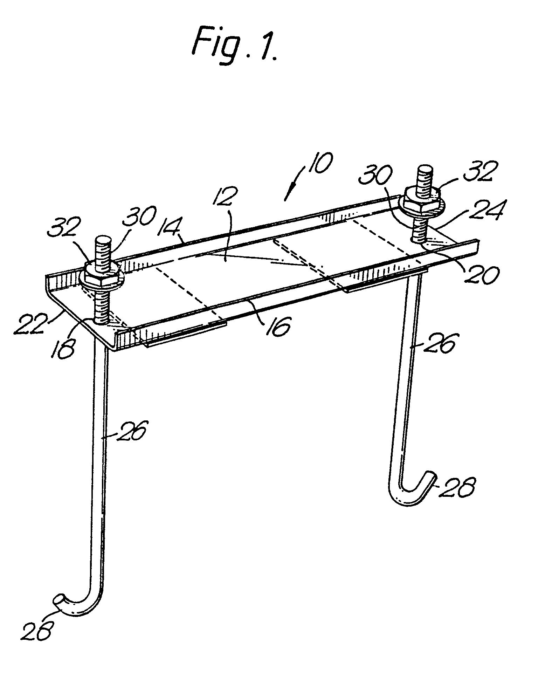

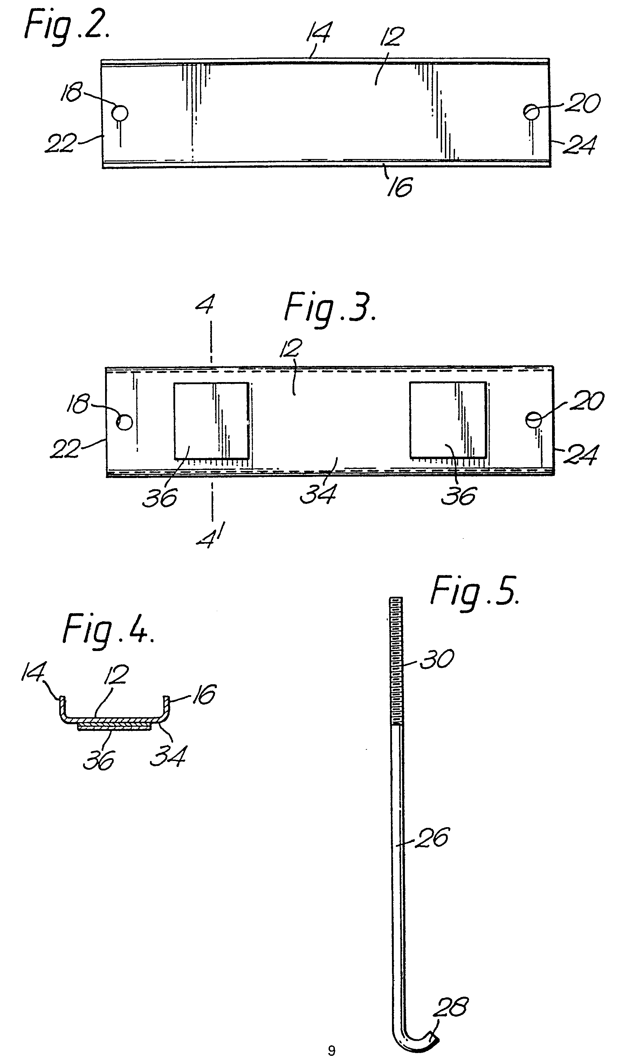

A battery clamp assembly 10 according to the present invention is shown in Figure 1, and comprises a rigid bridging member 12 in the shape of a substantially rectangular plate member having the longitudinal edges 14, 16 thereof upturned to produce a substantially channel-shaped cross-section as shown in Figure 4. As can be seen in Figure 2 of the drawings, two apertures 18, 20 are provided in the bridging member 12, each one of which is adjacent a lateral edge 22, 24 of the bridging member 12.

The battery clamp assembly 10 also includes two anchor members 26, as shown in Figure 5 of the accompanying drawings, each anchor member 26 being in the shape of a hooked bolt having a hooked portion 28 at one end thereof, and, at the other end thereof, a threaded portion 30. As can be seen in Figure 1 of the drawings, the threaded portion 30 of each of the anchor members 26 is threaded through a respective aperture 18, 20 in the bridging member 12 and is retained therein by means of a shaped nut member 32 threadedly engaged with the respective threaded portion 30 of the anchor member 26.

The lower surface of bridging member 12 forms a flat clamping surface 34, and this clamping surface 34 is partially covered with two separate square pads 36 of a substantially smooth acid-resistant material having a high coefficient of friction within the range of 0.8 to 1.2.

The two pads 36 are firmly secured to the clamping surface 34 by means of a suitable adhesive. As can be seen in Figure 3, the two pads 36 are spaced apart from one another symmetrically upon the clamping surface 34 to ensure a balanced clamping force being applied to a storage battery secured by the battery clamp assembly 10. It will be realized, of course, by a man skilled in the art that the whole of the clamping surface 34 could be covered by the high friction material or that, if desired, more than two separate pads 36 of material could be used. Similarly, the material could be secured to the clamping surface 34 by fastening methods other than adhesive, provided that the material retained a substantially smooth surface having a high coefficient of friction to be placed in contact with the top surface of the battery to be secured. A highly suitable material for the pads 36 is a polyurethane rubber sheet material which is commercially available under the trade name of Polyurethane Roll Stock SJ 5816 from 3M United Kingdom Plc, Tape and Allied Products Division. This commercially available material is supplied complete with an adhesive backing for securing the material in place upon the clamping surface 34.

In an example of a battery clamp assembly 10 shown in the accompanying drawings, the bridging member is 209 mm long and 50 mm wide, with the side walls of the channel-shaped member being 12 mm high. The bridging member is made of mild steel 2.0 mm thick, and the two apertures 18, 20 are each 7.0 mm in diameter and are each located on the longitudinal axis of the bridging member 12 with their centres spaced 8 mm from the respective lateral edges 22, 24 of the bridging member 12. Each pad 36 of acid-resistant material is 1.5 mm thick and is in the shape of a square pad measuring 35 mm × 35 mm. As can be seen in Figure 3 of the drawings, each of the pads 36 is positioned symmetrically upon the clamping surface 34, with each pad being positioned so that the edge thereof closest to the respective lateral edge 22, 24 of the bridging member 12 is positioned a distance of 32.5 mm from said lateral edge. The uncovered areas of bridging member 12 are coated with an acid-resistant paint. The anchor members 26 are formed from mild steel wire of diameter 5.3 mm which is zinc-plated to resist corrosion. The treaded portion 30 of each anchor member 26 is 60 mm in length. The overall length of the anchor member 26 shown in Figure 5 is 200 mm, but it should be understood that this overall length would be modified to suit the structure of the motor vehicle in which the storage battery concerned would be clamped by the battery clamp assembly 10, without affecting the scope of the present invention.

The battery clamp assembly 10 shown in the accompanying drawings has been designed to clamp an electrical storage battery of the aforesaid "Freedom" type in place in a commercial motor vehicle, but it will be appreciated by a man skilled in the art that the assembly could also be used for clamping standard lead-acid electrical storage batteries in a motor vehicle. The "Freedom" type batteries have polypropylene cases which include a smooth, featureless upper surface, apart from the terminals of the storage battery. Such a "Freedom" type battery is clamped into place within a housing in a motor vehicle by placing the bridging member 12 across an upper surface of the storage battery so that the clamping surface 34 is in juxtaposition with said upper surface, with the pads 36 in contact with that upper surface. The threaded ends 30 of the anchor members 26 are threaded through the respective apertures 18, 20 in bridging member 12 either before or directly after placing the bridging member 12 in position across the storage battery and the hooked portions 28 thereof are engaged in respective apertures in the body structure of the motor vehicle adjacent said battery housing. The shaped nut members 32 are then screwed on to the respective threaded portions 30 of the anchor members 26, and adjusted until the clamping member 12 is pressed firmly and securely against the upper surface of the storage battery, each nut member 32 being tightened on its respective anchor member 26 until it is judged that sufficient clamping pressure is being applied to the storage battery. The area of contact between the pads 36 and the upper surface of the storage battery is sufficient to ensure that there is not any subsequent substantial relative movement occurring between said storage battery and said motor vehicle body structure whilst that motor vehicle is in motion.

A battery clamp assembly according to the present invention represents a simple yet effective improvement to a battery clamp assembly to render that battery clamp assembly capable of clamping electrical storage batteries having outer cases of polypropylene so securely as to avoid the risk of any substantial relative movement of the batteries occurring, when so clamped. Such an improved clamp assembly is both cheap to make and simple to use, and has the advantage of being capable of use with a number of different sizes of electrical storage battery, since it does not rely upon any specific dimension or shape of the battery case in order to be effective. Moreover, the clamping area of the clamp assembly according to the present invention is such as to reduce to a minimum the risk of damaging or cracking a battery case with the clamp assembly.

## Claims

1. A battery clamp assembly (10) for retaining an electrical storage battery in place upon a motor vehicle, which clamp assembly comprises a rigid bridging member (12) having opposed free ends (22, 24), each of which is releasably engaged with an anchor member (26) adjustable in length and adapted at a free end (28) thereof to engage with a body structure of said motor vehicle, *characterised in that* said bridging member (12) is provided with a substantially flat clamping surface (34) which is at least partially covered with a substantially smooth acid-resistant material (36) having a high coefficient of friction, so that, when the clamp assembly (10) is used to clamp said storage battery in place upon said motor vehicle by placing the bridging member (12) across an upper surface of the storage battery, engaging the free ends (22, 24) of the bridging member (12) with the respective anchor members (26), engaging the respective anchor members (26) with the body structure and adjusting the length thereof to clamp the clamping surface (34) of the bridging member (12) firmly against said upper surface of the storage battery, the covered portions (36) of said clamping surface (34) retain the storage battery securely in place upon the motor vehicle and prevent any substantial relative movement between said storage battery and said motor vehicle body structure.

2. A battery clamp assembly according to claim 1, *characterised in that* the acid-resistant material (36) has a coefficient of friction within the range of 0.8 to 1.2.

3. A battery clamp assembly according to claim 1 or 2, *characterised in that* the acid-resistant material (36) is secured to the clamping surface (34) of the bridging member (12) by means of an adhesive.

4. A battery clamp assembly according to claim 1 or 2, *characterised in that* the clamping surface (34) of the bridging member (12) is completely covered by a sprayed or dipped coating of said acid-resistant material (36).

5. A battery clamp assembly according to any one of the preceding claims, *characterized in that* the acid-resistant material (36) is a resilient material.

6. A battery clamp assembly according to any one of the preceding claims, *characterised in that* the acid-resistant material (36) is a polyurethane rubber material.

7. A battery clamp assembly according to any one of the preceding claims, *characterised in that* the bridging member (12) is a substantially rectangular plate member having the longitudinal edges (14, 16) thereof upturned to produce a member having a substantially channel-shaped cross-section, and having the lateral edges (22, 24) thereof apertured to accommodate respective anchor members (26); each anchor member (26) comprises a hooked bolt having the hooked portion (28) thereof engageable in a respective aperture in said body structure and a threaded end portion (30) thereof passing through the aperture (18, 20) in the respective lateral edge (22, 24) of the plate member and having threaded thereon a nut member (32) adapted to bear against the upper surface of the plate member; and the lower surface of the plate member constitutes said clamping surface (34) upon which is secured at least two discrete pads (36) of said acid-resistant material.

## Patentansprüche

1. Batterie-Klemmanordnung (10) zum Zurückhalten einer elektrischen Speicher-Batterie an ihrem Ort an einem Kraftfahrzeug, mit einem starren Brückenglied (12) mit einander gegenüberliegenden freien Enden (22, 24), von denen jedes lösbar mit einem in seiner Länge einstellbaren Ankerglied (26) in Eingriff ist, das an einem freien Ende (28) desselben zum Eingriff mit einem Karosserieaufbau des Kraftfahrzeuges ausgelegt ist, dadurch gekennzeichnet, dass das Brückenglied (12) mit einer im wesentlichen ebenen Klemmfläche (34) versehen ist, die mindestens teilweise mit einem im wesentlichen glatten säurebeständigen Material (36) mit einem hohen Reibungskoeffizienten bedeckt ist, so dass, wenn die Klemmanordnung (10) zum Klemmen der Speicherbatterie an ihrem Ort an dem Kraftfahrzeug benutzt wird, durch Ansetzen des Brückengliedes (12) über eine obere Fläche der Speicher-Batterie, wobei die freien Enden (22, 24) des Brückengliedes (12) mit den jeweiligen Ankergliedern (26) in Eingriff gebracht sind, die jeweiligen Ankerglieder (26) mit dem Karosserie-aufbau in Eingriff gebracht sind und die Länge derselben zum Festklemmen der Klemmfläche (34) des Brückengliedes (12) gegen die Oberfläche der Speicher-Batterie eingestellt ist, die bedeckten Abschnitte (36) der Klemmfläche (34) die Speicher-Batterie sicher an ihrer Stelle an dem Kraftfahrzeug halten und jede wesentliche Relativbewegung der Speicher-Batterie gegen den Karosserieaufbau des Kraftfahrzeuges verhindern.

2. Batterie-Klemmanordnung nach Anspruch 1, dadurch gekennzeichnet, dass das säurebeständige Material (36) einen Reibungskoeffizienten innerhalb des Bereiches von 0,8 bis 1,2 besitzt.

3. Batterie-Klemmanordnung nach Anspruch 1 oder 2, dadurch gekennzeichnet, dass das säurebeständige Material (36) an der Klemmfläche (34) des Brückengliedes (12) mittels eines Klebers befestigt ist.

4. Batterie-Klemmanordnung nach Anspruch 1 oder 2, dadurch gekennzeichnet, dass die Klemmfläche (34) des Brückengliedes (12) vollständig durch eine Sprüh- oder Tauch-Beschichtung aus dem säurebeständigen Material (36) bedeckt ist.

5. Batterie-Klemmanordnung nach einem der vorangehenden Ansprüche, dadurch gekennzeichnet, dass das säurebeständige Material (36) ein elastisches Material ist.

6. Batterie-Klemmanordnung nach einem der vorangehenden Ansprüche, dadurch gekennzeichnet, dass das säurebeständige Material (36) ein Polyurethan-Gummi-Material ist.

7. Batterie-Klemmanordnung nach einem der vorangehenden Ansprüche, dadurch gekennzeichnet, dass das Brückenglied (12) ein im wesentlichen rechtwinkliges Platenglied ist, dessen Längskanten (14, 16) zur Erzeugung eines Gliedes mit im wesentlichen kanalförmigem Querschnitt nach oben gewendet sind, und dessen Querkanten (22, 24) zur Aufnahme jeweiliger Ankerglieder (26) mit Durchbrüchen versehen sind, dass jedes Ankerglied (26) eine Hakenschraube umfasst mit einem Hakenabschnitt (28) derselben, der in einen jeweiligen Durchbruch in dem Karosserieaufbau einhängbar ist und mit einem Gewinde-Endabschnitt (30) derselben, der durch den Durchbruch (18, 20) in der jeweiligen Querkante (22, 24) des Plattengliedes hindurchgeht und an dem ein Mutterelement (32) aufgeschraubt ist, das zum Anlegen gegen die obere Fläche des Plattengliedes ausgelegt ist, und dass die untere Fläche des Plattengliedes die Klemmfläche (34) bildet, an der mindestens zwei diskrete Kissen des säurebeständigen Materials befestigt sind.

## Revendications

1. Dispositif de serrage de batterie (10) permettant de maintenir en place une batterie d'accumulateurs électriques sur un véhicule à moteur, lequel dispositif de serrage comprend une pièce rigide faisant pont (12) présentant des extrémités opposées libres (22, 24) avec chacune desquelles vient en prise de manière amovible un élément d'ancrage (26) qui est réglable en longueur et est adapté, à une extrémité libre (28), de manière à coopérer avec une structure de carrosserie dudit véhicule à moteur, caractérisé en ce que ladite pièce faisant pont (12) présente une surface de serrage sensiblement plane (34) qui est recouverte au moins partiellement d'une matière sensiblement lisse et résistante aux acides (36) qui présente un coefficient élevé de frottement, si bien que, lorsque le dispositif de serrage (10) est utilisé pour serrer ladite batterie d'accumulateurs en position sur ledit véhicule à moteur en plaçant la pièce faisant pont (12) d'un côté à l'autre d'une surface supérieure de cette batterie, en faisant coopérer les extrémités libres (22, 24) de la pièce faisant pont (12) avec les éléments respectifs d'ancrage (26), en faisant coopérer ces éléments respectifs d'ancrage (26) avec la structure de carrosserie et en réglant leur longueur de manière à serrer solidement la surface de serrage (34) de la pièce faisant pont (12) contre ladite surface supérieure de la batterie d'accumulateurs, les parties recouvertes (36) de cette surface de serrage (34) maintiennent en place de manière sûre la batterie d'accumulateurs sur le véhicule à moteur et empêchent tout mouvement relatif notable entre cette batterie d'accumulateurs et ladite structure de carrosserie du véhicule à moteur.

2. Dispositif de serrage de batterie conforme à la revendication 1, caractérisé en ce que la matière résistante aux acides (36) présente un coefficient de frottement dans la plage de 0,8 à 1,2.

3. Dispositif de serrage de batterie conforme à la revendication 1 ou 2, caractérisé en ce que la matière résistante aux acides (36) est fixée sur la surface de serrage (34) de la pièce faisant pont (12) au moyen d'une substance adhésive.

4. Dispositif de serrage de batterie conforme à la revendication 1 ou 2, caractérisé en ce que la surface de serrage (34) de la pièce faisant pont (12) est complètement recouverte d'un revêtement de ladite matière résistante aux acides (36) appliqué par pulvérisation ou immersion.

5. Dispositif de serrage de batterie selon l'une quelconque des revendications précédentes, caractérisé en ce que la matière résistante aux acides (36) est une matière élastique.

6. Dispositif de serrage de batterie selon l'une quelconque des revendications précédentes, caractérisé en ce que la matière résistante aux acides (36) est un matériau à base de caoutchouc de polyuréthane.

7. Dispositif de serrage de batterie selon l'une quelconque des revendications précédentes, caractérisé en ce que la pièce faisant pont (12) est une plaque sensiblement rectangulaire dont les bords longitudinaux (14, 16) sont dirigés vers le haut de façon à former une pièce présentant une section transversale sensiblement en forme de U, et dans les bords latéraux (22, 24) de laquelle sont ménagées des ouvertures permettant de recevoir les éléments respectifs d'ancrage (26), chaque élément d'ancrage (26) étant constitué par une tige filetée à crochet dont la partie en crochet (28) peut coopérer avec une ouverture associée ménagée dans ladite structure de carrosserie et dont la partie extrême filetée (30) traverse l'ouverture (18, 20) ménagée dans le bord latéral associé (22, 24) de la plaque, un écrou (32) conçu de manière à prendre appui contre la surface supérieure de la plaque étant vissé sur cette partie extrême filetée (30), tandis que la surface inférieure de cette plaque constitue ladite surface de serrage (34) sur laquelle sont fixés au moins deux patins séparés (36) de ladite matière résistante aux acides.

Fig. 1.

**Fig.2.**

14  12

18  20

22  24

16

**Fig.3.**

4

12

18  20

22  24

36  34  36

4'

**Fig.4.**

14  12  16

36  34

**Fig.5.**

30

26

28

9